Europäisches Patentamt

European Patent Office

Office européen des brevets

(11) Numéro de publication: **0 446 543 A1**

# DEMANDE DE BREVET EUROPEEN

(21) Numéro de dépôt: 90403407.1

(22) Date de dépôt: 30.11.90

(51) Int. Cl.5: **B60G 17/056**, F15B 13/044, F16K 31/04

(30) Priorité: 13.03.90 FR 9003151

(43) Date de publication de la demande:
18.09.91 Bulletin 91/38

(84) Etats contractants désignés:
DE ES GB IT SE

(71) Demandeur: REGIE NATIONALE DES USINES
RENAULT S.A.
34, Quai du Point du Jour
F-92109 Boulogne Billancourt Cédex(FR)

(72) Inventeur: **Girardi, Philippe**
**16, rue Albert Molinier**
**F-95410 Groslay(FR)**
Inventeur: **Le Privey, Jean-Marie**
**53, rue Jean Mermoz**
**F-02380 Garches(FR)**

(74) Mandataire: **Ernst-Schonberg, Michel**
**REGIE NATIONALE DES USINES RENAULT**
**SA, Sce 0267, 860, quai de Stalingrad**
**F-92109 Boulogne Billancourt Cédex(FR)**

(54) Servo-mécanisme à valve rotative à entraînement électrique.

(57) Servo-mécanisme à valve rotative à entraînement électrique du type comportant un boîtier (20)
de montage de la valve (10) et d'un moteur électrique (14) et dans lequel un dispositif de transmission
(15) relie cinématiquement lesdits moteur et valve,
caractérisé par le fait que la valve et le moteur sont
disposés dans deux alésages (21, 22) d'axes parallèles qui débouchent dans une chambre de fluide (23)
limitée axialement par un premier couvercle (26) de
fermeture, tandis que les fonds desdits alésages
sont limités par une cloison (32) de séparation qui
constitue l'appui étanche d'un deuxième couvercle
(36) de fermeture qui recouvre, à la fois le dispositif
de transmission (15) et un moyen codeur (16) et
capteur (17) de position du rotor (12) de la valve
(10).

FIG.1

L'invention concerne un servo-mécanisme à valve rotative à entraînement électrique destiné à la mise en pression d'un récepteur hydraulique, dans lequel la valve est en communication, soit avec une source de pression hydraulique, soit avec l'échappement selon la position angulaire du rotor de la valve par rapport à son stator.

L'invention concerne plus particulièrement l'implantation d'un tel servo-mécanisme dans un boîtier étanche assemblé dans lequel la valve rotative et le moteur électrique sont disposés dans un élément dudit boîtier.

L'invention concerne également un servo-mécanisme dans lequel un moyen codeur et un moyen capteur mobiles l'un par rapport à l'autre assurent la transmission du signal de position du rotor de la valve par rapport à sa position centrale ouverte à un dispositif de contrôle et de commande du moteur électrique.

L'invention a aussi pour objet un servo-mécanisme à valve rotative dans lequel le moteur électrique d'entraînement est refroidi par le fluide de commande du récepteur hydraulique.

L'invention trouve avantageusement une application dans les dispositifs de commande de vérins destinés par exemple à modifier les paramètres d'une suspension de véhicule automobile.

La publication FR-A 2 584 659 décrit un dispositif de commande de hauteur de véhicule automobile dans lequel un moteur électrique est monté dans un boîtier pivotant qui actionne une valve de distribution à trois voies par l'intermédiaire d'une transmission mécanique.

Le problème non résolu par ce dispositif réside en ce que les variations d'amplitude de déplacement du boîtier conditionnent l'établissement des liaisons hydrauliques.

L'invention a pour objet de remédier au problème précité, par une structure originale du boîtier de commande selon laquelle la valve et le moteur sont disposés dans deux alésages d'axes parallèles qui débouchent dans une chambre de fluide limitée axialement par un premier couvercle de fermeture, tandis que les fonds desdits alésages sont limités par une cloison de séparation qui constitue l'appui étanche d'un deuxième coucercle de fermeture qui recouvre, à la fois le dispositif de transmission et un moyen codeur et capteur de position du rotor de la valve.

Le servo-mécanisme ainsi réalisé présente l'avantage de constituer un ensemble compact incorporant notamment une valve rotative de faible encombrement axial dont le raccordement au système de suspension ne nécessite aucun réglage particulier avant sa mise en service.

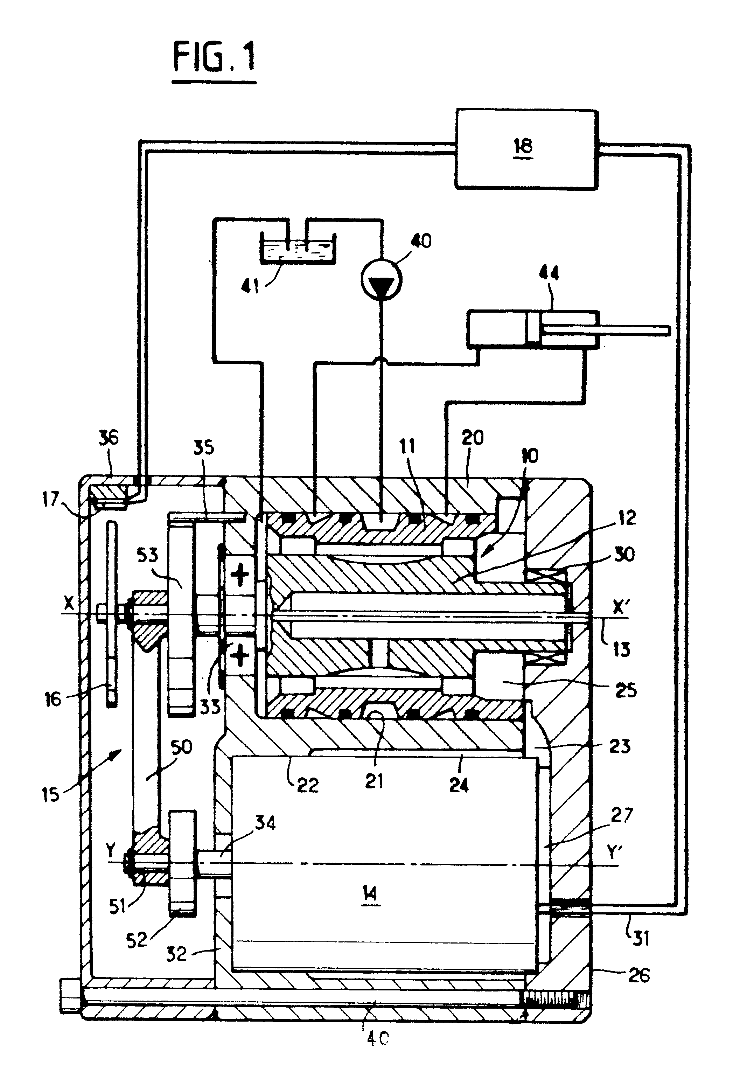

D'autres caractéristiques et avantages de l'invention ressortiront d'un mode de réalisation du mécanisme fait en référence au dessin annexé dans lequel la figure 1 représente une vue en coupe axiale du servo-mécanisme.

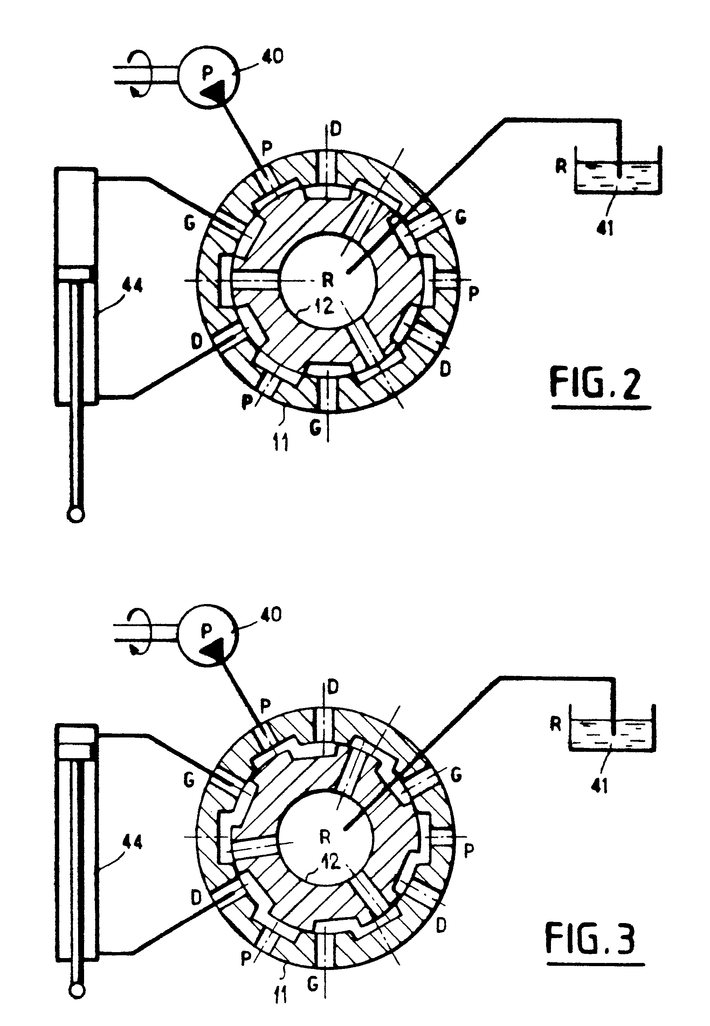

Les figures 2 et 3 représentent des vues en coupe radiale de la valve hydraulique dans deux états de fonctionnement.

En référence à la figure 1, le servo-mécanisme est constitué par un ensemble mécanique constitué par une valve de distribution rotative 10 qui comporte, selon une disposition connue, principalement deux éléments coaxiaux constitués par un élément distributeur externe 11 et un rotor ou élément interne 12. Ces deux éléments sont montés tournant l'un par rapport à l'autre autour de leur axe commun 13 pour assurer une distribution de fluide vers les chambres d'un vérin. De façon connue, le débattement angulaire possible entre les éléments de distributeur 11, 12 est limité à quelques degrés et l'axe commun 13, réalisé à titre d'exemple sous la forme d'un ressort ou d'une barre de torsion, est fixé entre les deux éléments de distributeur pour opposer un couple de rappel à tout décalage angulaire de ceux-ci, de part et d'autre d'une position neutre.

Un moteur électrique 14 à courant continu et à déplacement angulaire limité assure l'entraînement de l'élément interne 12 par l'intermédiaire d'un dispositif de transmission 15 constitué, à titre d'exemple, par un système d'engrènement ou par un système bielle 50 manivelle 51 montés sur des disques menant 52 et mené 53 respectivement montés en bout de l'arbre du moteur 14 et du rotor 12 de la valve 10. A cet effet, l'élément interne 12 de la valve et l'arbre du moteur électrique 14 portent des éléments de transmission.

L'élément interne 12 porte, de plus, un moyen codeur 16 constitué, à titre d'exemple, par une roue dentée ou par un disque aimanté multipolaire monté à défilement devant un élément capteur 17 supposé à titre d'exemple, fixe, qui délivre des signaux de position de la valve à un bloc électronique 18 dont une voie de sortie alimente le circuit de commande du moteur 14.

Ainsi que cela est montré à la figure, la valve 10 et le moteur 14 sont incorporés dans un boîtier 20 comportant un premier alésage 21 d'axe xx' de l'élément externe 11 emmanché de manière étanche dans ledit alésage, un second alésage 22 d'axe yy' du moteur 14 dans lequel son stator est emmanché ou vissé. Les axes xx' et yy' des alésages 21, 22 sont parallèles et lesdits alésages débouchent dans une chambre de fluide commune 23. A titre d'exemple non limitatif, on utilisera un moteur électrique tel que décrit dans la publication FR-A 2 611 811.

A cet effet, la chambre 23 possède une configuration annulaire constituée en partie par une portion évasée 24 du deuxième alésage 22 mise en communication avec une chambre de fluide 25 constituée par une portion du premier alésage 21.

La chambre de fluide 23 est limitée axialement par un premier couvercle 26 de fermeture du boîtier 20 dont une partie évasée 27 agrandit la chambre 23 dans le but de favoriser la circulation d'huile autour du moteur 14.

Le couvercle 26 porte, par ailleurs, un palier ou un roulement 30 de l'élément rotor 12 et la traversée étanche des fils d'alimentation 31 du moteur 14. Le couvercle 26 porte, par ailleurs, l'ancrage de l'extrémité de l'axe 13.

Les fonds des alésages 21, 22 sont limités par une cloison de séparation 32 qui porte un roulement à billes ou tout autre type de palier 33 de l'élément rotor 12 de la valve et permet la traversée de l'arbre de sortie 34 du moteur 14. La cloison 32 porte, par ailleurs, un organe de butée 35 qui limite les déplacements angulaires de la transmission 15 et, par voie de conséquence, limite l'amplitude du déplacement angulaire de l'élément rotor susceptible de détériorer la barre de torsion 13 et de modifier les caractéristiques de fonctionnement de la valve.

La cloison 32 constitue l'appui étanche d'un deuxième couvercle 36 de fermeture qui recouvre, à la fois le système de transmission 15 et les moyens codeur 16 et capteur 17.

Les couvercles 26, 36 sont flasqués sur le boîtier 20 par une série de vis 40 axiales disposées à la périphérie de l'un des couvercles 36 ou 26 et vissées au travers des perçaoes du boîtier 20 dans des taraudages portés par l'autre couvercle 26 ou 36.

Le fonctionnement du servo-mécanisme ressort des dessins.

La figure 2 montre les positions relatives des éléments 11, 12 de la valve en position de repos en correspondance avec une distribution hydraulique à centre ouvert selon lesquelles les voies d'utilisation P-R - G-D sont en communication avec la pompe 40, un réservoir 41 et les chambres d'un vérin 44.

La figure 3 montre la position des éléments de la valve dans laquelle la pompe 40 alimente le vérin 44 alors que l'autre sortie de la valve est en communication avec le réservoir 41.

## Revendications

1. Servo-mécanisme à valve rotative à entraînement électrique du type comportant un boîtier (20) de montage de la valve (10) et d'un moteur électrique (14) et dans lequel un dispositif de transmission (15) relie cinématiquement lesdits moteur et valve, caractérisé par le fait que la valve et le moteur sont disposés dans deux alésages (21, 22) d'axes parallèles qui débouchent dans une chambre de fluide (23) limitée axialement par un premier couvercle (26) de fermeture, tandis que les fonds desdits alésages sont limités par une cloison (32) de séparation qui constitue l'appui étanche d'un deuxième couvercle (36) de fermeture qui recouvre, à la fois le dispositif de transmission (15) et un moyen codeur (16) et capteur (17) de position du rotor (12) de la valve (10).

2. Servo-mécanisme selon la revendication 1, caractérisé par le fait que le premier couvercle (26) porte le palier (30) du rotor de la valve (10) et l'ancrage d'un organe de torsion (13) destinée à exercer un couple de rappel au décalage angulaire du rotor (12) de la valve.

3. Servo-mécanisme selon la revendication 1, caractérisé par le fait que la cloison de séparation (32) porte un palier (33) du rotor de la valve et une butée (35) de limitation du déplacement angulaire.

4. Servo-mécanisme selon la revendication 1, caractérisé par le fait que le dispositif de transmission est constitué par un mécanisme à bielle et manivelle respectivement montés sur des disques 52, 53 menant et mené en bout d'arbre du moteur (14) et du rotor (12) de la valve.

# FIG.1

FIG.2

FIG.3

Office européen
des brevets

**RAPPORT DE RECHERCHE
EUROPEENNE**

Numéro de la demande

**EP 90 40 3407**

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (Int. Cl.5) |
|---|---|---|---|
| A | EP-A-0 140 759  (CITROEN)<br>* le document en entier * | 1 | B 60 G 17/056<br>F 15 B 13/044<br>F 16 K 31/04 |
|  | — — — |  |  |
| A | GB-A-9 627 94  (SPERRY) |  |  |
|  | — — — — — |  |  |

|  |
|---|
| DOMAINES TECHNIQUES<br>RECHERCHES (Int. Cl.5) |
| B 60 G<br>F 15 B<br>F 16 K |

Le présent rapport de recherche a été établi pour toutes les revendications

| Lieu de la recherche | Date d'achèvement de la recherche | Examinateur |
|---|---|---|
| La Haye | 13 mars 91 | KNOPS J. |